# EUROPEAN PATENT APPLICATION

(11) **EP 1 568 712 A1**
(43) Date of publication of application: **31.08.2005**
(21) Application number: 03811910.3
(22) Date of filing: 20.11.2003
(51) Int. Cl.: C08B 37/00

(54) **HIGH-CONCENTRATION LIQUID PULLULAN AND METHOD OF CIRCULATING THE SAME**

(30) Priority: 22.11.2002 JP 2002338720
(71) Applicant: KABUSHIKI KAISHA HAYASHIBARA SEIBUTSU KAGAKU KENKYUJO, Okayama 700-0907 (JP)
(72) Inventor: Kanbe, Mitsuyuki, Kabushiki Kaisha Hayashibara, Okayama-shi, Okayama 700-0907 (JP); Sawatani, Ikuo, Kabushiki Kaisha Hayashibara, Okayama-shi, Okayama 700-0907 (JP); Aga, Hajime, Kabushiki Kaisha Hayashibara, Okayama-shi, Okayama 700-0907 (JP)
(74) Representative: Daniels, Jeffrey Nicholas
(86) International application number: PCT/JP2003/014820
(87) International publication number: WO 2004/048420

(57) **Abstract**

The present invention has objects to provide a novel high pullulan content liquid and a method for transporting the same, and solves the objects by providing a high pullulan content liquid which has a viscosity of 2.5 mm²/s or more in terms of a pullulan concentration of 10% (w/w) when determined at 30°C on the Ubelode viscometer method, a common bacterial count of less than 300 cells/g product, a negativity with respect to coliform group, a pH of 4.5 to 7.5, and a pullulan concentration of 20% (w/w) or more; and by providing a method for transporting the same under a prescribed temperature condition.

## Description

### Technical Field

The present invention relates to a high pullulan content liquid and a method for transporting the same.

### Background Art

Pullulan is a water-soluble polysaccharide obtainable by culturing a microorganism capable of producing pullulan in a liquidmediumwhich contains a saccharide (s) such as glucose, maltose, maltooligosaccharide, isomaltooligosaccharide, starch syrup, sucrose, fructose, sugars obtained by saccharification and inversion, isomerized sugar, or molasses as disclosed, for example, in Japanese Patent Kokoku Nos. 36,360/76, 42,199/76 and 27,099/80, and Japanese Patent No. 3,232,488. Examples of methods for producing pullulan include those which comprise the steps of culturing a microorganism capable of producing pullulan in the above-identified liquid medium in a batch-wise, semi-continuous, or continuous manner, filtering the resulting culture, and optionally successively subjecting the filtrate to desalting, decoloring, and concentration, and then forming into a film; or drying a concentrate after the above culture, and pulverizing the dried product into a pullulan powder; or those which comprise the steps of desalting the cultures obtained in the above methods, precipitating pullulan from the desalted cultures by alcohol sedimentation, and drying the resultants into pullulan powders with a relatively high purity. All the pullulan products obtainable by the above conventional methods are in the form of a powder or film, i.e., a solid pullulan. Accordingly, pullulan products now commercially available in the market are only in a solid form but not a liquid form. Therefore, no pullulan products in a liquid form, particularly, neither high pullulan content liquid products nor any methods for transporting the same have been known hitherto. The reason is that, unlike solid pullulan products, liquid pullulan products have been recognized to be susceptible to microbial pollution and change in pH and viscosity, and therefore actual use of such liquid pullulan products have been deemed to be impossible. As another reason, commercialization of liquid pullulan products has been recognized to be impossible in an aspect of free-flowing ability because the viscosity of liquid pullulan products will logarithmically, proportionally increase as the increment of pullulan concentration.

However, liquid pullulan products, particularly, high pullulan content liquids have been increased in a great demand nowadays in the fields of food products, health foods, cosmetics, pharmaceuticals, chemicals, agriculture, forestry and fishery. Under these circumstances, users requiring such liquid pullulan products must inevitably purchase solid pullulan products, and in use dissolve them in appropriate solvents to obtain only inhomogeneous liquid pullulan products. In such a case, users have to provide solvents, containers, apparatuses and tools for dissolving such solid pullulan products, where time, labor, and energy for such dissolution are required as the demerits. Further, solid pullulan products have another demerits that they easily form "*mamako* or *dama"* (coagulation of solid pullulan products), readily incorporate bubbles into the resulting suspensions and only provide inhomogeneous liquid pullulan products with a pullulan concentration of about 10 to about 15% (w/w) even when prepared under heating conditions. Such a heating may cause molecular reduction of pullulan and result in viscosity reduction of liquid pullulan products as another demerit.

### Disclosure of Invention

The present invention was made in view of the above-identified prior arts, and it has an object to provide users pullulan products, which have been deemed to be possibly transported/distributed/circulated (designated as "transported" hereinafter, unless specified otherwise) to users only in the form of a solid; the present invention provides a pullulan product in a liquid form, i.e., a high pullulan content liquid, which can be stably stored and transported with a relatively high pullulan concentration, and which is satisfactorily handleable and provided to users at a lesser cost; and provides a method for transporting such a liquid pullulan product.

The present inventors energetically studied to solve the above objects. As a result, they found that one of the above objects can be solved by a hygienic high pullulan content liquid, which has a prescribed level of viscosity, pH, and pullulan concentration, has a common bacterial count (may be called "viable bacterial count") at a level of not higher than a prescribed level, and has no coliform group; and by a method for transporting the above high pullulan content liquid under a prescribed temperature condition.

The present invention solves one of the above objects by providing a high pullulan content liquid which has a viscosity of 2.5 mm²/s or more in terms of a pullulan concentration of 10% (w/w) when determined at 30°C on the Ubelode viscometer method, a common bacterial count of less than 300 cells/g product, a negativity with respect to coliform group, a pH of 4.5 to 7.5, and a pullulan concentration of 20% (w/w) or more.

The present invention solves one of the above objects by a high pullulan content liquid containing pullulan with a weight-average molecular weight (MW) of 5,000 to 500,000.

The present invention solves one of the above objects by using an aqueous pullulan solution as the high pullulan content liquid.

The present invention solves one of the above objects by a high pullulan content liquid prepared by incorporating one or more disinfectants and/or bacteriostats to the above high pullulan content liquid.

The present invention solves one of the above objects by the above high pullulan content liquid incorporated with ethanol as the disinfectants and/or bacteriostats.

The present invention solves one of the above objects by a method for transporting the above high pullulan content liquid under a temperature condition of 14°C or lower.

The present invention solves one of the above objects by a method for transporting the above high pullulan content liquid, incorporated with the above disinfectants and/or bacteriostats, under a temperature condition of 37°C or lower.

### Best Mode for Carrying Out the Invention

The high pullulan content liquid and the method for transporting the same according to the present invention are described in detail hereinafter.

The high pullulan content liquid of the present invention has a viscosity of 2.5mm²/s or more in terms of a pullulan concentration of 10% (w/w) when determined at 30°C on the Ubelode viscometer method, a common bacterial count of less than 300 cells/g product, a negativity with respect to coliform group, a pH of 4.5 to 7.5, and a pullulan concentration of 20% (w/w) or more. Throughout the specification, the common bacterial count was assayed according to the method for counting common bacteria by the standard plate count method described in *Method of Analysis in Health Science 2000,* page 75, edited by Pharmaceutical Society of Japan, published on February 29, 2000 by Kanehara & Co., Ltd., Tokyo, Japan.

Referring to the method for preparing the high pullulan content liquid of the present invention, a microorganism capable of producing pullulan is cultured in a nutrient liquid culture medium containing a saccharide(s) in a batch-wise, semi-continuous, or continuous manner at an initial pH of 5 to 7.5, a temperature of 20 to 40°C, preferably, 25 to 35°C for 1 to 10 days to produce pullulan. Examples of such a microorganism include those which are disclosed in Japanese Patent Kokoku Nos. 36,360/76, 42,199/76 and 27,099/80, and Japanese Patent No. 3,232,488; and any of conventionally known pullulan-producing microorganisms can be used.

The weight-average molecular weight (MW) of pullulan can be controlled by regulating the pH and the phosphoric concentration in the culture media used. To produce pullulan with a relatively lower molecular weight, the pH and the phosphoric concentration are set to a relatively high level. While, to produce pullulan with a relatively higher molecular weight, the pH and the phosphoric concentration are set to a relatively low level. In case of using K₂HPO₄ as a phosphoric acid, it is usually set to a desired concentration within the range of 0.1 to 0.5% (w/w).

Liquid pullulan products obtained after the above culture usually have a pH of less than 5.0, a residue of ignition as sulfate of 0.05% (w/w) or more when determined on the ashing in the presence of sulfuric acid, a viable bacterial count including coliform group per gram of an aqueous pullulan solution is 1x10³ or more, and a pullulan concentration of at most 15% (w/w). Compared with the high pullulan content liquid of the present invention, such conventional liquid pullulan products are relatively low in viscosity and/or concentration of pullulan, abundant in impurities, and free of any treatments of sterilization and removal of microorganisms, they will be promptly polluted with microorganisms as the time lapse and will be usually quite heavily deteriorated in quality within several days to a week.

Using as a material a liquid pullulan product obtained through conventional process of producing pullulan, the high pullulan content liquid of the present invention is obtained by subjecting the material to one or more methods of centrifugation, alcohol separatory sedimentation method, salting out, desalting and decoloration method, column chromatography, membrane filtration, and membrane concentration; fractionating the desired fractions rich in pullulan usually having a weight-average molecular weight (MW) of 5,000 or more, preferably, 10,000 to 500,000, and a pullulan concentration of 20% (w/w) or more, preferably, 20 to 40% (w/w), more preferably, 25 to 40% (w/w), more preferably, 25 to 35% (w/w); and collecting the desired fractions. When the resulting liquid pullulan product has a lower or higher viscosity and a lower or higher pullulan concentration than those as defined in the above range, it is concentrated by a conventional concentration method such as membrane concentration or concentration *in vacuo,* or diluted with the addition of appropriate solvents such as water and alcohols. The viscosity of liquid pullulan product with a higher viscosity can be decreased by heating the high pullulan content liquid product usually at a temperature of 100°C or higher for several minutes to several hours. The viscosity, concentration, and molecular weight of pullulan of the high pullulan content liquid product are closely related each other. The viscosity of the high pullulan content liquid product will increase as the increase of the molecular weight and concentration of pullulan. Based on this relationship, the viscosity of the high pullulan content liquid of the present invention can be controlled by regulating its viscosity to meet its final use. For example, 20% (w/w) aqueous pullulan solutions, containing pullulan with a weight-average molecular weight (MW) of about 5,000, about 50,000, about 130,000, and about 400,000, respectively, have a viscosity of about 2.5 mm²/s, about 6.5 mm²/s, about 21 mm²/s, and about 160 mm²/s, respectively, in terms of a pullulan concentration of 10% (w/w) when determined at 30°C on the Ubelode viscometer method. The viscosity and the pullulan concentration of the high pullulan content liquid of the present invention can be increased by the addition of a purified or partially purified pullulan. Although the upper limit of the viscosity of the high pullulan content liquid of the present invention is set depending on its use, it is usually preferably set to give a viscosity of about 250 mm²/s or lower, preferably, about 200 mm²/s or lower, more preferably, about 180 mm²/s or lower in terms of a pullulan concentration of 10% (w/w) when determined on the Ubelode viscometer method at 30°C.

The pH of the high pullulan content liquid of the present invention is adjusted to a pH of 4.5 to 7.5, preferably, pH of 5.0 to 7.0, more preferably, pH 5.5 to 7.0, using any of alkaline agents such as sodium hydroxide and calcium hydroxide, and acid agents such as hydrochloric acid and organic acids. In the case of the high pullulan content liquid of the present invention has a pH of less than 4.5 or a pH of more than 7.5, such a pH is not preferable because it may cause quite undesirable quality change in the high pullulan content liquid of the present invention during its storing or heat processing. The pH adjustment of the high pullulan content liquid of the present invention can be arbitrarily effected before or after the above adjustment of viscosity or concentration.

Treatments of sterilization of microorganisms, removal of microorganisms, and bacteriostasis of the high pullulan content liquid of the present invention can be effected before or after the steps of adjusting the pH, viscosity and concentration of the high pullulan content liquid to a desired level, i.e., a level of negativity with respect to coliform group and of a common bacterial count of less than 300 cells/g product, preferably, not more than 50 cells/g product, more preferably, not more than 10 cells/g product, and most preferably, germ-free, by one or more methods of ultraviolet decontamination, microwave sterilization, disinfection by irradiation such as β- or γ-ray, sterile filtration, pressure sterilization, centrifugation, chemical sterilization, pasteurization, and high temperature sterilization such as high temperature short time sterilization (HTST sterilization), and ultra high temperature heating method (UHT sterilization). Although the above sterilization of microorganisms, removal of microorganisms, and bacteriostasis of the high pullulan content liquid of the present invention are usually effectively employed at the final stage of the preparation of the high pullulan content liquid, they should preferably be carried out in each steps of the adjustment of pH, viscosity, and pullulan concentration of the liquid to effectively reduce contaminated pyrogen derived from microorganisms. To minimize the contamination of pyrogen as low as possible, the processing steps after the culture of pullulan-producing microorganisms should preferably be sterilely conducted throughout the steps. In the case of sterilizing the high pullulan content liquid of the present invention by heating at a temperature of, for example, 100°C or higher, it should be noted that such a treatment will cause the reduction of molecular weight of pullulan and the reduction of viscosity and pH of the final product. To avoid the problem of bacterial contamination, the high pullulan content liquid of the present invention is preferably incorporated with one or more bactericides, disinfectants, and bacteriostats including straight or branched saturated or unsaturated C₁₋₂₀ alcohols such as methanol, ethanol, *n*-propyl alcohol, isopropyl alcohol, and butyl alcohol; and the steps for adjusting the pH, viscosity and concentration of the high pullulan content liquid should preferably be conducted under temperatures of 14°C or lower, preferably, 12 to 4°C with respect to the product temperature of the liquid. However, considering the facilities, apparatuses, instruments, and energy required for cooling the high pullulan content liquid of the present invention, temperatures preferably employed are those in the range of 14 to 4°C, more preferably, 12 to 8°C, with respect to the product temperature of the high pullulan content liquid.

Under the above-identified temperature conditions of 14°C or lower, even when the high pullulan content liquid of the present invention is not germ-free but only contaminated with a common bacterial count of less than 300 cells/g product, it can be advantageously retained its desired quality just after its processing for a relatively long period of time. While a high pullulan content liquid product with a common bacterial count of 300 cells/g product or more will be usually promptly contaminated with bacteria to deteriorate the product.

Among the high pullulan content liquids of the present invention, those which are free of bactericides, disinfectants, and bacteriostats can be stably kept for a long period of time of about three months or longer at a lesser cost of equipments, apparatuses, and cooling energy required for cooling the products to keep the quality just after their processings, when they are transported, preserved and stored under temperatures of 14 to 4°C, preferably, 12 to 8°C. Referring to the transportation form of the high pullulan content liquid of the present invention, it can be exemplified to be transported under the above-identified temperature conditions after injected into various shapes and volumes of containers, or tanks and containers loaded into or equipped on trains, ships, air planes, and trucks such as tank trucks. In the case of transporting the high pullulan content liquid of the present invention under natural conditions capable of keeping the product temperature at 14°C or lower, it can be advantageously transported even by the above-identified transportation means with no cooling apparatuses, while keeping the quality stably with ease and at a lesser cost.

Among the high pullulan content liquids of the present invention, those with the above-mentioned alcohols, particularly, those with ethanol at a concentration of at least 2.5% (w/w), preferably, 2.5 to 10% (w/w) as a bactericide, disinfectant, or bacteriostat have advantage that they can be transported, preserved and stored while stably keeping the quality just after their processings for a long period of time of about three months or longer without fear of causing bacterial contamination, when handled under natural environmental temperature conditions, preferably, where the product temperature can be controlled at 37°C or lower. Since the high pullulan content liquid of the present invention is not over cooled, it can be easily heated to a desired level with a lesser energy as a merit. In the case that the high pullulan content liquid of the present invention is incorporated in a container with an air layer, the layer should preferably be deairated or replaced with carbon dioxide, nitrogen gas, etc. , to effectively inhibit the growth of aerobic bacteria. Installation of appropriate free oxygen absorbers within the container or the addition of such absorbers to the high pullulan content liquid can inhibit the growth of aerobic bacteria effectively.

The high pullulan content liquid of the present invention is a novel liquid pullulan product which has never been commercialized in the market. The characteristics of the high pullulan content liquid are summarized in the below:
(1) It contains pullulan at a concentration of 20% (w/w) or more, preferably, 20 to 40% (w/w);
(2) It is prevented or free from bacterial contamination and also inhibited from change in viscosity, pH, color degree, and turbidity;
(3) It can be easily processed into the desired shaped product or composition alone or by combining with other appropriate components;
(4) It is a homogeneous, stable liquid pullulan product which is prepared without causing any trouble as found in conventional liquid pullulan product which has been deemed impossible to be prepared with a solid pullulan product into a homogeneous liquid pullulan product due to the fact that such a solid pullulan easily forms *"mamako* or *dama"* (coagulation of solid pullulan) when placed in a solvent to prepare a liquid pullulan product with the same pullulan concentration as that of the high pullulan content liquid of the present invention;
(5) It is a readily handleable liquid pullulan product with an adequate free-flowing ability at ambient temperature or at a relatively mild temperature of 40 to 70°C, even though it contains a relatively high pullulan concentration, i.e., 20% (w/w), preferably, 20 to 40% (w/w) of pullulan.

The following Experiments and Examples describe in detail the high pullulan content liquid of the present invention and a method for transporting the same:

### Experiment 1 : Quality retaining test on high pullulan content liquid

To examine the quality retaining test on the high pullulan content liquid of the present invention, the high pullulan content liquid with a pullulan concentration of about 30% (w/w) obtained in the later described Example 1 (designated as "high pullulan content liquid in this experiment", hereinafter) was distributed into twenty-four 500-ml glass containers by 250 ml each, followed by sealing the containers, placing four of the containers in each thermostat controlled at 6, 12, 15, 16, 27 or 37°C, and allowing all the containers to stand for 13 weeks. On 2, 4, 9 and 13 weeks after initiation of the test, one container out of four containers in each thermostat was removed therefrom and sterilely sampled, followed by assaying each sample for viable bacterial count, coloration degree, turbidity, and viscosity. For each specimen the common bacterial count was assayed according to the method for counting common bacteria by the standard plate count method described in *Method of Analysis in Health Science 2000,* page 75, edited by Pharmaceutical Society of Japan, published on February 29, 2000 by Kanehara & Co., Ltd., Tokyo, Japan. The pH was determined by directly measuring the specimens with a pH meter. The coloration degree of each specimen was determined by diluting with sterilized refined water by 3-times and calculating the difference between the absorbance at a wavelength of 420 nm and that of 720 nm (=A₄₂₀-A₇₂₀) in a 1-cm light-pass cell. The turbidity of each specimen was determined by diluting with sterilized refined water by 3-times and measuring the absorbance at a wavelength of 720 nm in a 1-cm light-pass cell. The viscosity was determined and expressed in such a manner of diluting each specimen with sterilized refined water by 3-times; subjecting the dilute to an Ubelode viscometer, commercialized by Sogo Laboratory Glass Works, Co., Ltd., for mearurement at 30°C; and converting the measured viscosity value in terms of a 10% (w/w) aqueous pullulan solution. The specimens once sampled for analysis were discarded. The results are in Table 1.

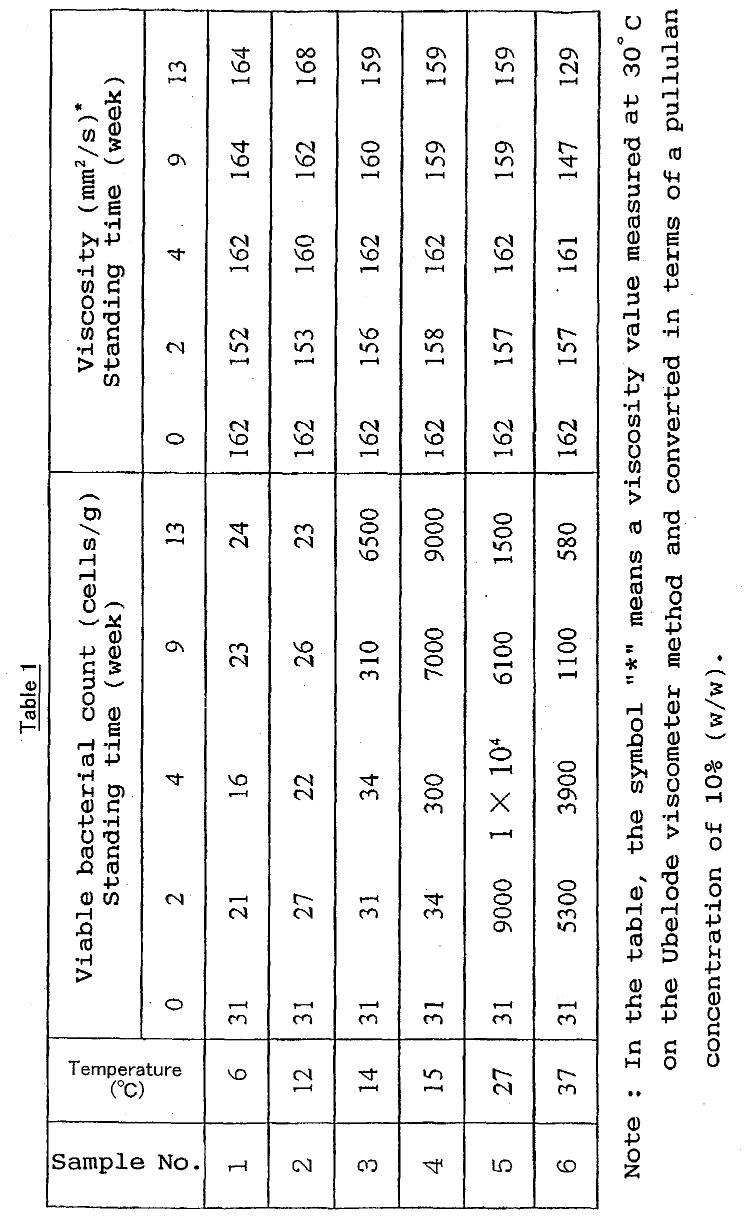

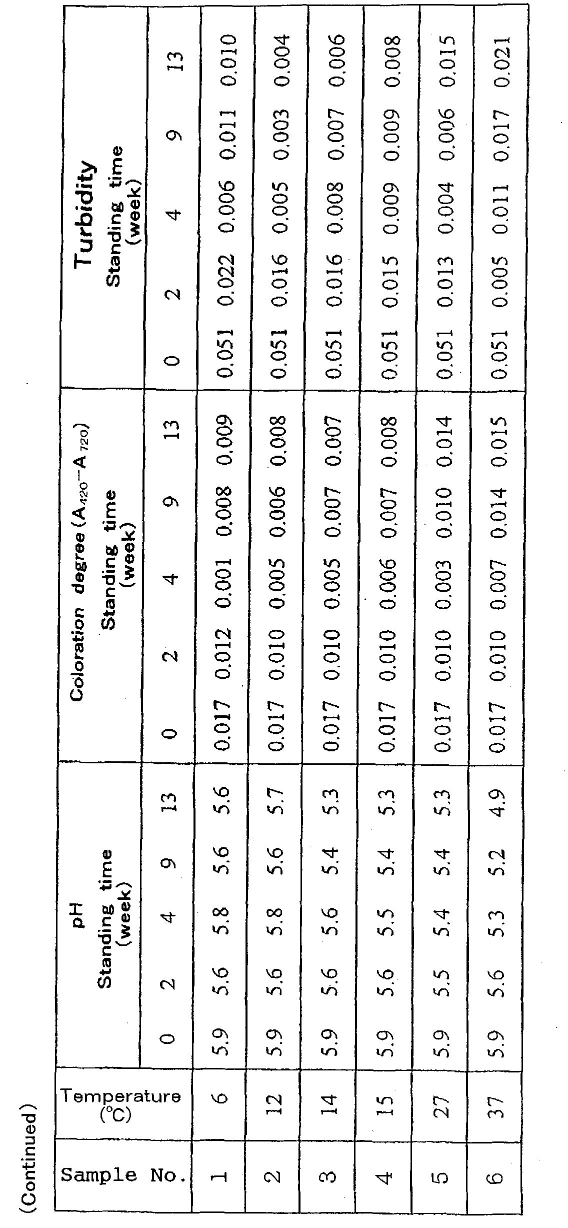

As evident from the results in Table 1, the high pullulan content liquid in this experiment substantially retained its original viscosity, viable bacterial count, pH, coloration degree, and turbidity just after the initiation of this experiment for about three months (13 weeks), when allowed to stand under a temperature condition of 12°C or lower. The turbidity tended to decrease as the time lapse of standing. When allowed to stand under a temperature conditions of 14°C, the high pullulan content liquid in this experiment retained its original viscosity, viable bacterial count, pH, coloration degree, and turbidity just after the initiation of this experiment up to four weeks, but it tended to increase the viable bacterial count and to decrease the viscosity and pH nine weeks after the initiation of this experiment. While, when allowed to stand at a temperature condition of 15°C, the high pullulan content liquid in this experiment substantially retained its original viscosity, viable bacterial count, pH, coloration degree, and turbidity just after the initiation in this experiment up to two weeks, but it tended to greatly increase the viable bacterial count and to decrease the viscosity and pH after four weeks after the initiation of this experiment.

In the case of allowing to stand at 27°C or 37°C, the high pullulan content liquid in this experiment showed a significant increase of viable bacterial count two weeks after the initiation of this experiment. When allowed to stand at 37°C, the high pullulan content liquid in this experiment remarkably decreased in viscosity and pH from nine weeks after initiation of this experiment. In Table 1, the values for indicating coloration degree and turbidity tended to decrease as the time lapse of standing, however, they could be interpreted as substantially changeless in view of their measured values.

Based on these results, it was revealed that the high pullulan content liquid in this experiment will be stably retained its original quality just after its processing for at least four weeks when handled under a temperature condition of 14°C or lower, and retained its original quality for at least three months when handled under a temperature condition of 12°C or lower.

In this experiment, a high pullulan content liquid with a pH of 5.9 was used as a test specimen, however, analogues thereof only modified to give a pH of 4.5, 5.5, 6.5 or 7.5 will show a similar result as in the above. In the case of high pullulan content liquids with a pH of less than 4.5 or a pH of over 7.5, they are not preferable because they tend to greatly change in viscosity, pH, coloration degree, and turbidity as the time lapse of standing. Further, such high pullulan content liquids with such a low or high pH are not preferable because theywill cause the molecular reduction of pullulan when heated.

### Experiment 2: Quality retaining test on high pullulan content liquid

As an experiment for the quality retaining test on high pullulan content liquid, the high pullulan content liquid with a pullulan concentration of about 30% (w/w) obtained in the later described Example 1 was distributed to thirty-two sterilized 500-ml glass containers by 200 ml each. The containers were divided into four groups of A, B, C and D, by eight containers for each group, to which were then added ethanol as a disinfectant or bacteriostat to give a concentration of 1.0, 2.5, 5 or 10% (w/w), followed by incubating them in a thermostat controlled at 27°C or 37°C for about three months (13 weeks). For each test specimen, it was sampled on 2, 4, 9 and 13 weeks after the initiation of this experiment and examined for viable bacterial count, pH, coloration degree, turbidity, and viscosity, which were measured similarly as in Experiment 1. The specimens once sampled for analysis were discarded. The results are in Table 2.

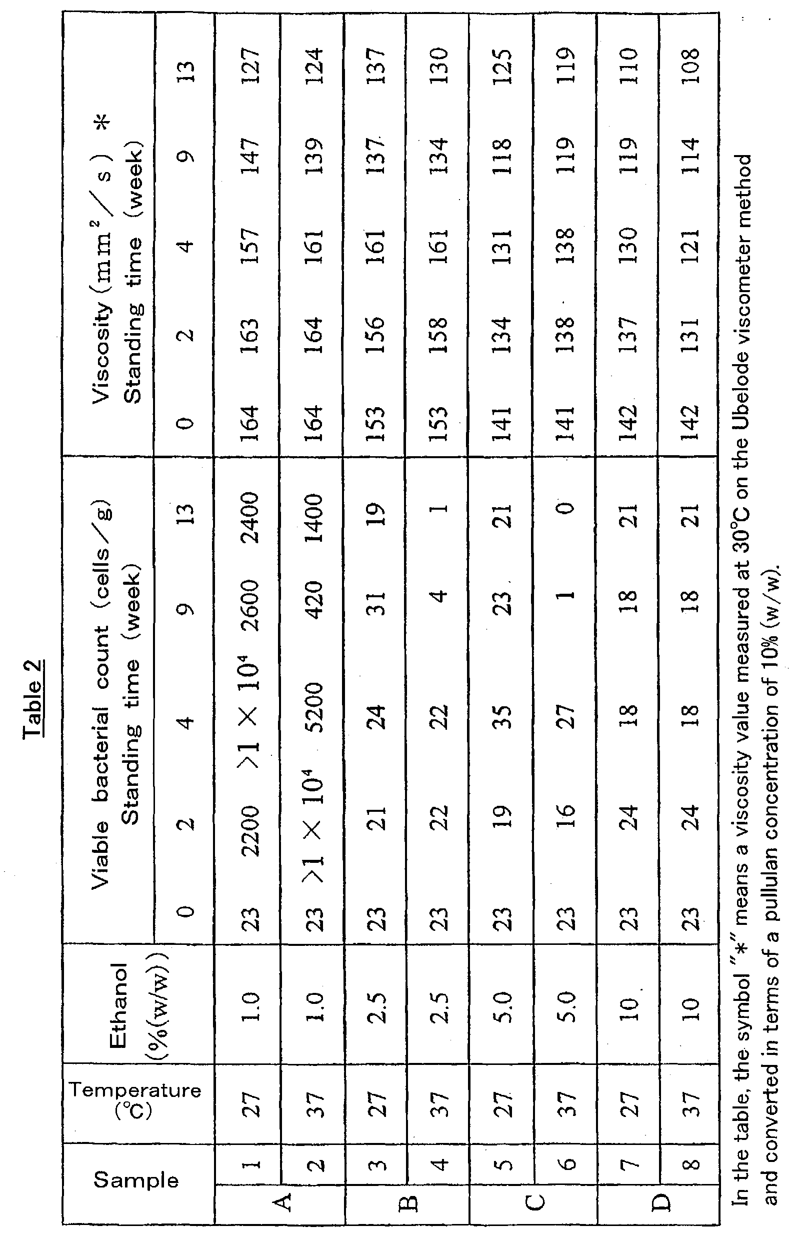

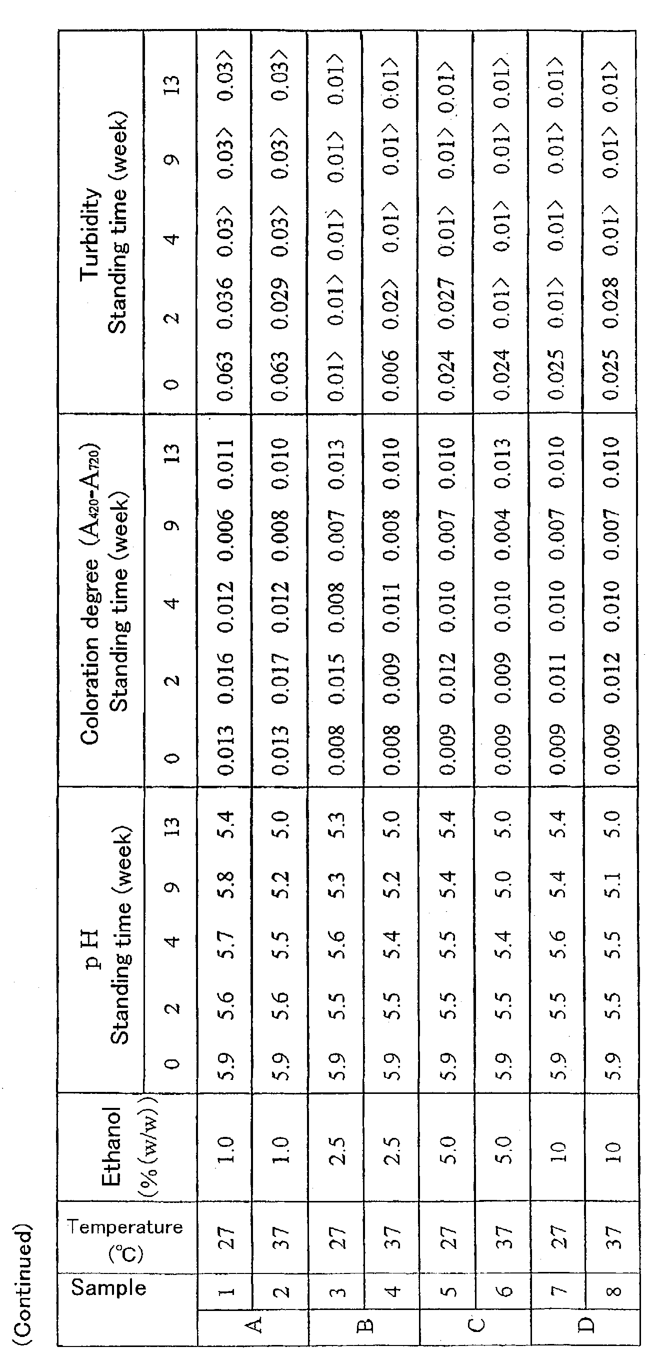

As evident from the results in Table 2, it was revealed that the high pullulan content liquid with an ethanol concentration of at least 2.5% (w/w) stably retained its original quality just after its processing for about three months under any of the temperature conditions of 27°C and 37°C.

In this experiment, a high pullulan content liquid with pH 5.9 was used as a test specimen, however, analogues thereof only modified to give a pH of 4.5, 5.5, 6.5 or 7.5 will show a similar result as in Table 2. In the case of high pullulan content liquids with a pH of less than 4.5 or a pH of over 7.5, they are not preferable because they tend to greatly change in viscosity, pH, coloration degree, and turbidity as the time lapse of standing. Further, such high pullulan content liquids with such a low or high pH are not preferable because they will cause the molecular reduction of pullulan when heated.

### Example 1

A 10% (w/w) aqueous pullulan solution (pH 3.5) was obtained in accordance with the method for producing pullulan disclosed in Japanese Patent No. 3,232,488. The aqueous pullulan solution was desalted and decolored with an ion-exchange resin, filtered, concentrated, adjusted to give a pH of 5.9 with 5N-NaOH, and subjected to UHT sterilization (150°C for two to three seconds) to obtain a high pullulan content liquid having a final pullulan concentration of about 30% (w/w) and containing pullulan with a weight-average molecular weight (MW) of 400,000. The high pullulan content liquid had a viscosity of 162 mm²/s in terms a pullulan concentration of 10% (w/w) when determined on the Ubelode viscometer at 30°C, a residue of ignition as sulfate of 0.01% (w/w) or lower when determined on the ashing in the presence of sulfuric acid, a viable bacterial count of 31 cells/g product, and a negativity of *Escherichia coli.*

### Example 2

An 8% (w/w) aqueous pullulan solution (pH 2.5) was obtained in accordance with the method for producing pullulan disclosed in Japanese Patent No. 3,232,488. The aqueous pullulan solution was desalted and decolored with an ion-exchange resin, filtered, concentrated, sterilized by heating at 70°C for one hour, adjusted to give a pH of 7.5 with 5N-NaOH to obtain a high pullulan content liquid having a final pullulan concentration of about 25% (w/w) and containing pullulan with a weight-average molecular weight (MW) of 50,000. After sterilization by heating, the high pullulan content liquid had a viscosity of 6.5 mm²/s in terms of a pullulan concentration of 10% (w/w) when determined on the Ubelode viscometer at 30°C, a residue of ignition as sulfate of 0.01% (w/w) or lower when determined on the ashing in the presence of sulfuric acid, and a viable bacterial count of three cells/g product. The liquid was sterilely passed through a heat exchanger to cool to give a temperature of 12 to 10°C , transported by a ship having a 50-m³ tank equipped with a cooling unit while cooling the content at 12°C to its destination in 10 days, transferred to 10-ton tank trucks equipped with a cooling unit capable of cooling the content to 12°C, and distributed to a user in four days. The aqueous pullulan solution delivered to the user retained substantially the same quality as its original factory regulation.

### Example 3

A 12% (w/w) aqueous pullulan solution (pH 5.3) was obtained in accordance with the method for producing pullulan disclosed in Japanese Patent No. 3,232,488. The aqueous pullulan solution was desalted and decolored with an ion-exchange resin, filtered, concentrated, adjusted to give a pH of 6.5 with 4N-NaOH to obtain a high pullulan content liquid having a final pullulan concentration of about 31% (w/w) and containing pullulan with a weight-average molecular weight (MW) of 130,000. The high pullulan content liquid had a viscosity of 21 mm²/s in terms of a pullulan concentration of 10% (w/w) when determined on the Ubelode viscometer at 30°C, a residue of ignition as sulfate of 0.01% (w/w) or lower when determined on the ashing in the presence of sulfuric acid, and a viable bacterial count of 20 cells/g product.

When stored at a temperature of 14°C, the product retained substantially the same quality as its original quality just after its processing for one month. While, when stored at a temperature of 12°C or lower, the product retained substantially the same quality as its original quality just after its processing for at least three months.

### Example 4

A 12% (w/w) aqueous pullulan solution (pH 3.0) was obtained in accordance with the method for producing pullulan disclosed in Japanese Patent No. 3,232,488. The aqueous pullulan solution was desalted and decolored with an ion-exchange resin, filtered, concentrated, adjusted to give a pH of 6.0 with 4N-NaOH, admixed with ethanol as a disinfectant or bacteriostat to give a concentration of 2.5% (v/v) to obtain a high pullulan content liquid having a final pullulan concentration of about 35% (w/w) and containing pullulan with a weight-average molecular weight (MW) of 150,000. The high pullulan content liquid had a viscosity of 22 mm²/s in terms of a pullulan concentration of 10% (w/w) when determined on the Ubelode viscometer at 30°C, a residue of ignition as sulfate of 0.01% (w/w) or lower when determined on the ashing in the presence of sulfuric acid, and a viable bacterial count of 36 cells/g product.

When stored at a temperature of 37°C, the product retained substantially the same quality as its original quality just after its processing for at least three months.

### POSSIBILITY OF INDUSTRIAL APPLICABILITY

As described above, the present invention provides a high pullulan content liquid which stably retains its desired quality just after its processing for a relatively long period of time, and has a satisfactory handleability and a low-cost transportability; and a method for transporting the same. Since the high pullulan content liquid of the present invention does not require a step of solidifying pullulan as an inevitable step for conventional production of solid pullulan products, the energy required in such a step will be omitted or reduced and also the apparatuses and instrument need therein will be omitted, it can be advantageously provided users at a lesser cost than conventional solid pullulan products. When transported under specific temperature conditions, the high pullulan content liquid of the present invention can advantageously retain substantially the same quality as its original quality just after its processing for at least three months. Accordingly, the high pullulan content liquid of the present invention can be advantageously stably provided users when transported at home or even abroad, while retaining its original quality.

Similarly as conventional pullulan products in the form of a powder, film, or sheet, the high pullulan content liquid of the present invention can be arbitrarily applicable to wide fields of food products, cosmetics, pharmaceuticals, products for fishery/domestic animals/forestry, products for agriculture, and products for chemical industries.

As described above, the present invention is a significant invention that will greatly contribute to this art.

## Claims

1. A high pullulan content liquid, which has a viscosity of 2.5 mm²/s or more in terms of a pullulan concentration of 10% (w/w) when determined at 30°C on the Ubelode viscometer method, a common bacterial count of less than 300 cells/g product, a negativity with respect to coliform group, a pH of 4.5 to 7.5, and a pullulan concentration of 20% (w/w) or more.

2. The high pullulan content liquid of claim 1, wherein said pullulan has a weight-average molecular weight (MW) of 5,000 to 500,000.

3. The high pullulan content liquid of claim 1 or 2, which is in the form of an aqueous pullulan solution.

4. The high pullulan content liquid of claim 1, 2 or 3, which further contains one or more disinfectants and/or bacteriostats.

5. The high pullulan content liquid of claim 4, wherein said disinfectants and/or said bacteriostats are ethanol.

6. A method for transporting a high pullulan content liquid, which comprises a step of transporting said high pullulan content liquid under a temperature condition of 14°C or lower.

7. A method for transporting the high pullulan content liquid of claim 4 or 5 under a temperature condition of 37°C or lower.
